# FASCICULE DE BREVET EUROPEEN

(11) **EP 2 099 278 B1**
(45) Date de publication et mention de la délivrance du brevet: **13.10.2010**
(21) Numéro de dépôt: 07871794.9
(22) Date de dépôt: 05.12.2007
(51) Int. Cl.: A01B 51/04, A01B 73/06

(54) **PORTE-OUTILS DESTINÉ À COMBINER DES APPAREILS AGRICOLES**
WERKZEUGTRÄGER FÜR EINE LANDWIRTSCHAFTLICHE ERNTEMASCHINE
TOOL CARRIER FOR COMBINING AGRICULTURAL APPARATUS

(30) Priorité: 08.12.2006 FR 0610734
(43) Date de publication de la demande: 16.09.2009
(73) Titulaire: Société des Etablissements Louis Quivogne, 70210 Polaincourt (FR)
(72) Inventeur: QUIVOGNE, Jean-Luc, F-70500 Jussey (FR)
(74) Mandataire: Beauvais, Emmanuelle
(86) Numéro de dépôt international: PCT/FR2007/001998
(87) Numéro de publication internationale: WO 2008/081112

(56) Documents cités:
- EP-A- 0 135 180
- EP-A- 1 205 098
- WO-A-98/52402
- FR-A- 2 871 988
- US-A1- 2002 074 139

## Description

La présente invention concerne un porte-outils destiné à combiner plusieurs appareils agricoles, par exemple des semoirs.

Les documents EP-A-0135180 et EP-A-1205098 montrent dispositifs ayant les caractéristiques du préambule de la revendication 1.

Le document FR-2 871 988 décrit un porte-outils destiné à combiner des appareils agricoles, notamment des semoirs. Les porte-outils des modes de réalisation décrits comportent soit deux, soit trois appareils agricoles. Ces appareils, dans la position de travail dans laquelle des bras d'un châssis sont déployés en direction transversale à une flèche du châssis, couvrent une grande largeur qui peut être de 12 à 24 m.

L'avantage de tels porte-outils est d'augmenter la productivité du travail, mais ils posent un problème. En effet, le poids du porte-outils équipé des appareils agricoles est de l'ordre d'une dizaine de tonnes, et il n'est supporté que par deux roues. Ces dernières, dont la largeur est d'environ 60 cm, provoquent un tassement important du sol sur lequel elles roulent, juste devant les appareils agricoles.

Lorsque les appareils agricoles sont des semoirs, ce tassement du sol est suffisamment important pour que les conditions de culture diffèrent tellement entre les traces de roues et en dehors de ces traces que la récolte obtenue peut présenter une dispersion de qualité.

Ce problème est déjà connu, car un simple déplacement dans la campagne montre qu'il est fréquent que des cultures présentent un défaut d'uniformité mis en évidence par une taille réduite des plantes cultivées le long de traces. Par exemple, dans le cas de la culture du maïs, il est fréquent que les cultures soient arrosées par des pulvérisateurs ayant une portée de 24 m entre les passages. Cela signifie que des chemins ayant un pas de 24 m doivent être dégagés pour le déplacement des pulvérisateurs. Ces chemins ne portent pas habituellement de cultures. Cependant, entre ces chemins, les cultures présentent souvent des différences de hauteur dont certaines sont à attribuer à un tassement différentiel du sol par des roues de tracteur ou autre.

Ces différences de hauteur des plantes cultivées, qu'il s'agisse de maïs ou de colza, sont des indices de la dispersion de qualité précitée. Dans le cas du maïs par exemple, le prix des récoltes est déterminé d'après l'analyse d'échantillons des graines obtenues. Lorsque les plantes cultivées présentent les différences précitées de hauteur, il existe des différences de propriétés entre les graines obtenues, notamment parce que la granulométrie des graines obtenues est élargie. Comme les acheteurs considèrent qu'il s'agit d'un signe de moins bonne qualité, le prix qu'ils offrent sont habituellement réduits.

Pour éviter cette réduction de qualité, on a déjà limité le fonctionnement des semoirs aux seules parties qui ne sont pas alignées sur des traces de tassement au sol. Bien que cette disposition soit efficace, elle correspond à une réduction de rendement en cultures par unité de surface puisque la partie de surface considérée comme tassée n'est pas cultivée.

On a aussi essayé de supprimer les parties tassées par incorporation, entre les roues de support et les semoirs, des organes de culture, habituellement sous forme de griffes, destinés à ameublir le sol avant que les graines ne soient mises en place. Il existe notamment des techniques de "semis direct" dans lesquelles le sol est ameubli entre les roues les plus en arrière et les semoirs. Cependant, ces techniques nécessitent l'utilisation de tracteurs de forte puissance et donc de poids élevé dont les pneumatiques provoquent alors un tassement accru, bien plus important que celui que provoque un tracteur de faible puissance utilisé pour le simple déplacement de semoirs.

Une difficulté supplémentaire pour la solution du problème précité est que les semoirs doivent pouvoir former des lignes de semis ayant des espacements différents. Par exemple, pour la culture du maïs, les lignes de semis sont en général séparées par des espaces de 70 à 80 cm. Pour la culture du colza, cet espacement peut être aussi faible que 35 cm.

L'invention concerne la solution du problème précité, c'est-à-dire l'exécution d'une opération agricole sur pratiquement la totalité de la surface cultivée, sans bande non cultivée, quel que soit l'espacement des lignes de semis, avec un porte-outils de poids très important, par exemple de l'ordre de 10 t.

Selon l'invention, le problème est résolu d'une part par réduction de la largeur de chaque roue de support du porte-outils à une valeur nettement inférieure au plus petit espacement des lignes de semis les plus rapprochées à former, par exemple à une valeur de l'ordre de 30 cm. Ainsi, la charge qui, selon la technique connue, est supportée par une roue de 60 cm de largeur est supportée selon l'invention par deux roues ayant une largeur de l'ordre de 30 cm. A cet effet, l'invention met en oeuvre, à la place d'une roue unique, une paire de roues espacées, appelées "roues jumelées" ; en outre, l'espacement des paires de roues est tel que chaque paire de roues chevauche une ligne, indépendamment de l'espacement des lignes.

A cet effet, non seulement le porte-outils comporte des paires de roues jumelées, mais en outre l'espacement de ces paires de roues est réglable. Par exemple, les paires de roues peuvent être écartées d'une distance variable réglable entre 270 et 320 cm. De cette manière, des roues jumelées, comprenant chacune deux roues de 25 ou 30 cm de largeur séparées par un espace de l'ordre de 15 cm, chevauchent une ligne, quel que soit l'espacement de ces lignes dans la plage de 35 cm à 80 cm.

Plus précisément, l'invention concerne un porte-outils destiné à combiner des appareils agricoles, comprenant un châssis porté par des roues, le châssis ayant une flèche et des bras articulés autour d'axes sensiblement verticaux entre une position sensiblement parallèle à la flèche et une position sensiblement perpendiculaire à la flèche, chaque bras au moins étant muni d'un attelage d'appareil agricole, les roues étant disposées aux extrémités d'une traverse montée sur le châssis ; selon l'invention, à chaque extrémité de la traverse, le châssis porte au moins une paire de roues et un dispositif de réglage de l'espacement des paires de roues du porte-outils, par déplacement de chaque paire de roues en direction perpendiculaire à la flèche.

Dans un mode de réalisation avantageux, il comporte un dispositif de réglage de l'espacement des paires de roues du porte-outils, par déplacement de chaque paire de roues en direction perpendiculaire à la flèche.

L'invention s'applique de préférence à des porte-outils tels que le poids du porte-outils et des appareils agricoles est supérieur à 8 t.

De préférence, la paire de roues de chaque extrémité de la traverse est montée sur un essieu, de sorte qu'elle forme des roues jumelées, avec un espace entre les deux roues de la paire.

De préférence, l'espace entre les deux roues de la paire est supérieur ou égal à la moitié de la largeur de chaque roue de la paire.

Dans un exemple, chaque roue a une largeur d'environ 30 cm, et l'espace formé entre les deux roues jumelées est supérieur ou égal à 15 cm.

Dans une variante qui permet une réduction du tassement du sol, la paire de roues au moins de chaque extrémité de la traverse comporte deux paires de roues comprenant chacune deux roues jumelées espacées sur un même essieu, les deux essieux des deux paires de chaque extrémité de la traverse étant placés l'un derrière l'autre dans la direction de la flèche afin que, lors d'un déplacement du porte-outils, les roues de la paire arrière roulent sur les traces des roues de la paire avant.

Le porte-outils peut aussi comporter un dispositif de réglage de l'espacement des roues jumelées.

De préférence, chaque appareil agricole est monté sur un attelage qui limite la charge appliquée au sol par l'appareil agricole. Par exemple, l'attelage a une forme de parallélogramme et comprend un organe qui limite la déformation du parallélogramme, cet organe étant par exemple une chaîne.

Dans une application avantageuse, les appareils agricoles portés par les attelages sont des semoirs pneumatiques, et le porte-outils possède une turbine montée sur le châssis et alimentant tous les semoirs.

De préférence, le porte-outils comporte un appareil de réglage fin de la position de chaque bras afin que chaque bras soit bien perpendiculaire à la flèche. Par exemple, l'organe de réglage fin règle la position de maintien du bras par un vérin.

D'autres caractéristiques et avantages de l'invention seront mieux compris à la lecture de la description qui va suivre d'un exemple de réalisation, faite en référence aux dessins annexés sur lesquels :
les figures 1a et 1b sont des vues, en plan et en perspective respectivement, de deux porte-outils décrits dans le document précité n 2 871 988, constituant la technique antérieure la plus proche ;
la figure 2 est une vue en élévation latérale d'un porte-outils selon l'invention, en position pliée ;
la figure 3 est une vue en plan de l'appareil de la figure 2 ;
la figure 4 est une vue en perspective de l'appareil des figures 2 et 3 ;
la figure 5 représente le porte-outils des figures 2 à 4 en position déployée de travail ; et
la figure 6 est une vue en plan d'une partie du porte-outils des figures 2 à 5.
La figure la est une vue en plan d'un porte-outils destiné à combiner trois appareils agricoles, qui est extraite du document précité FR-2 871 988. Le porte-outils est représenté en position pliée dans laquelle il est déplacé par un tracteur auquel il est accroché par un attelage 4.

Le châssis 3 comprend une flèche qui comporte à l'avant l'attelage 4 et à l'arrière une traverse qui porte deux roues 5. L'arrière du châssis 3 porte, par l'intermédiaire d'un attelage en parallélogramme, un semoir 1. Le châssis comprend aussi deux bras latéraux munis chacun d'un semoir 1, monté aussi sur un attelage en parallélogramme. Le poids de l'ensemble du porte-outils et de ses semoirs est de l'ordre d'une dizaine de tonnés. Il est supporté uniquement par les deux roues 5 et l'attelage 4.

Dans un mode de réalisation, ces roues ont une largeur de 60 cm. Chaque roue applique donc au sol une force de 5 t environ, répartie sur une surface de 60 cm de largeur et de longueur analogue, correspondant à une pression qui provoque un tassement considérable du sol.

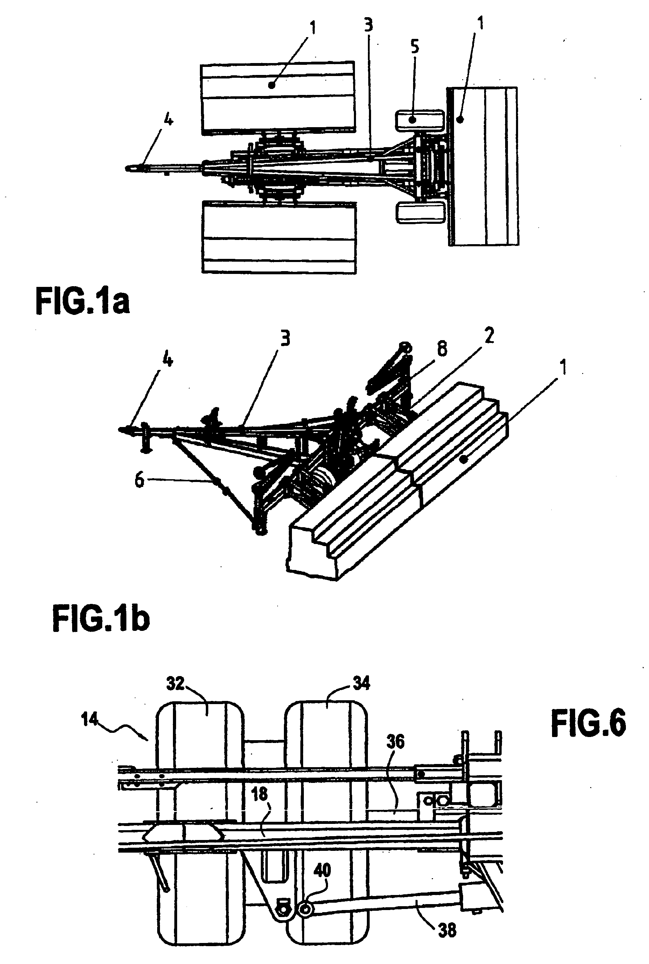

La figure 1b est une vue en perspective d'un porte-outils destiné à combiner deux appareils agricoles seulement, qui est aussi extraite du document précité FR-2 871 988. Le porte-outils est représenté en position déployée. Par rapport à la figure la, on note les attelages en parallélogrammes 2 et les tirants 6 de maintien des bras.

Selon la technique antérieure, les effets du tassement par les roues peuvent être compensés soit par utilisation de griffes disposées derrière les roues 5 mais devant les semoirs, soit par suppression du fonctionnement des parties de semoir qui se trouvent dans l'alignement des roues 5, avec les inconvénients de réduction de rendement indiqués précédemment.

Selon l'invention, le problème est résolu par application de la charge uniquement sur des zones comprises entre des lignes de semis, et de préférence de manière répartie. Ainsi, selon l'invention, les roues sont divisées pour pouvoir être plus étroites, et elles sont espacées afin que d'une part chaque roue ne roule que dans une zone comprise entre des lignes de semis, et que d'autre part chaque paire de roues chevauche ainsi au moins une ligne de semis (dans le cas où l'appareil agricole est un semoir).

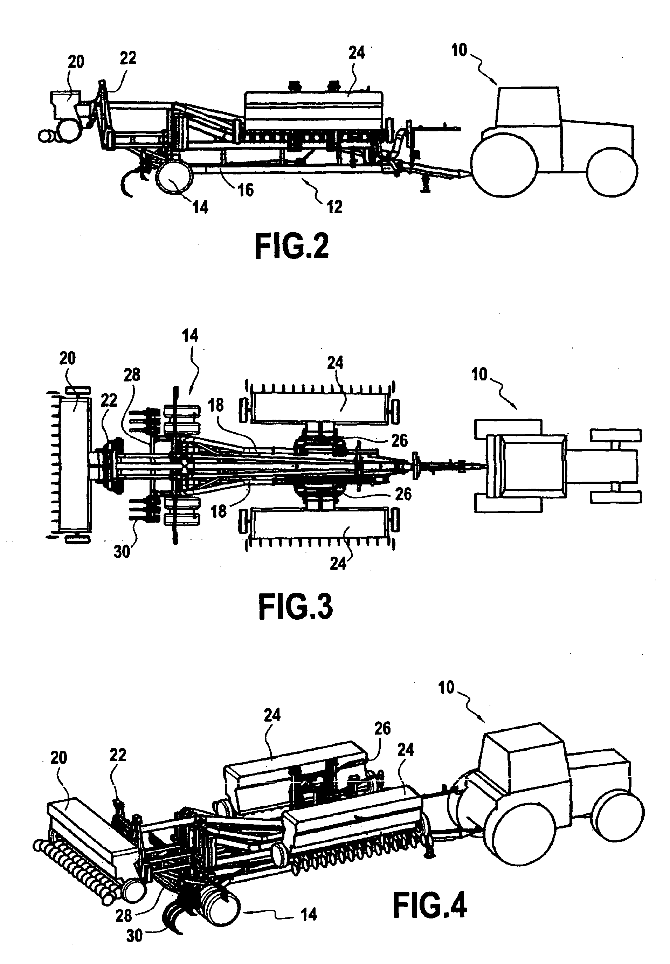

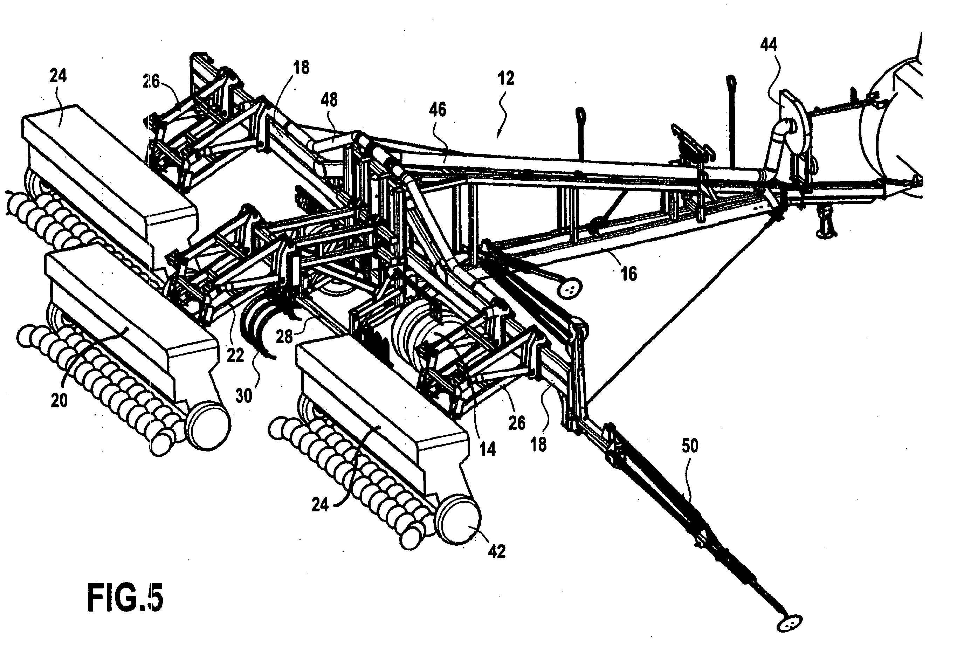

Les figures 2 à 5 représentent, derrière un tracteur 10, un porte-outils selon l'invention qui comporte un châssis 12 porté par des roues 14. Le châssis 12 possède une flèche 16 munie de bras 18 qui peuvent être déployés latéralement, comme l'indique la figure 5. Le châssis porte un semoir central 20 par l'intermédiaire d'un attelage en parallélogramme 22, et deux semoirs latéraux 24, par l'intermédiaire d'attelages en parallélogramme 26.

Dans le mode de réalisation représenté, le châssis 12 porte aussi, derrière les roues 14 et devant les semoirs, une barre 28 munie de griffes 30 destinées à ameublir le sol surtout dans les zones tassées par les roues du porte-outils et éventuellement du tracteur. Cette barre n'est pas indispensable à la mise en oeuvre de l'invention.

Dans le mode de réalisation représenté, les roues 14 comportent deux paires de roues, chaque paire comprenant deux roues jumelées 32, 34 autour d'un plan médian 33, séparées par un espace suffisamment important pour que chaque ligne de semis soit entourée d'une bande de sol non tassé. Par exemple, chaque roue 32 a une largeur de 25 ou 30 cm et l'espacement des deux roues 32, 34 est de 15 cm.

Les roues jumelées 32, 34 sont portées par la traverse 36 du châssis 12. Comme il est souhaitable de pouvoir utiliser le porte-outils pour semer avec un pas de 35 à 80 cm par pas de 5 cm par exemple, la position des roues jumelées le long de la traverse 36, c'est-à-dire la voie du porte-outils, est avantageusement réglable sous la commande d'un dispositif convenable.

Comme ce réglage est peu fréquent, il peut être effectué uniquement à la ferme, par disposition de boulons introduits dans des trous de la traverse qui déterminent la voie voulue. Dans une variante, la voie peut être réglée par un vérin incorporé, une fois que les roues ont été soulevées au-dessus du sol, par exemple à l'aide de vérins mécaniques, hydrauliques ou pneumatiques, d'un palan, d'un chariot ou d'un pont.

Sur la figure 6, on a aussi indiqué que chaque bras 18 était manoeuvré entre ses positions respectives des figures 2 à 4 d'une part et 5 d'autre part, à l'aide de vérins 38 agissant sur des équerres solidaires des bras, par l'intermédiaire d'articulations 40. Ces dernières comportent de préférence un dispositif de réglage fin permettant un alignement parfait des deux bras 18 l'un sur l'autre dans la position déployée des bras.

Si la traverse 36 a une longueur constante, les plans médians 33 des deux paires de roues 32, 34 sont séparés par une distance constante, par exemple 275 cm. Si cet espacement des plans 33 est constant, par exemple de valeur égale à 275 cm, l'espacement des lignes de semis peut être de 46 cm, 55 cm et 69 cm. Ces valeurs d'espacement ne sont pas très commodes à obtenir avec les semoirs existants. Il est donc préférable que la distance comprise entre les plans médians 33 des roues jumelées puisse être réglée à toute valeur voulue dans une plage, par exemple allant de 270 à 320 cm, permettant l'espacement des lignes de semis de 35 à 80 cm, par pas de 5 cm. Ces valeurs sont normalement obtenues facilement avec les semoirs existants.

Dans ce mode de réalisation, par rapport à l'appareil connu d'après le document précité, l'appareil comprend une traverse 36 de longueur réglable qui permet de faire varier la voie des roues (c'est-à-dire la distance comprise entre les deux plans 33) dans une certaine plage, par exemple d'environ 50 cm.

Les semoirs représentés sur les figures comportent des roues latérales qui peuvent elles-mêmes tasser le sol. Normalement, ces roues sont en dehors des lignes de semis. Cependant, il est souhaitable, pour éviter ce tassement, de limiter la descente des semoirs, par limitation de la déformation des parallélogrammes des attelages par un organe souple monté suivant la diagonale du parallélogramme opposée à celle qui comporte un vérin de manoeuvre de l'attelage. Un tel organe souple peut être avantageusement une chaîne.

Bien qu'on ait décrit un mode de réalisation dans lequel deux roues sont jumelées par montage sur un même axe, il est parfois utile que ces deux roues soient décalées "longitudinalement", c'est-à-dire dans la direction de déplacement ; par exemple, leurs axes peuvent être séparés par une distance voisine d'un rayon des roues. De cette manière, lorsque la roue la plus en avant descend dans un creux du sol, la roue arrière est plus élevée, de sorte que le déplacement en hauteur de la partie de traverse associée à cette paire de roues est plus faible que si les deux roues tombaient dans le creux.

Bien qu'on ait décrit un mode de réalisation dans lequel des roues jumelées sont montées à chaque extrémité de la traverse 36, il est possible de monter, à chaque extrémité de cette traverse, deux roues jumelées disposées l'une devant l'autre de manière que chaque roue de la paire arrière se déplace dans la trace formée par la paire de roues avant. Une telle disposition convient dans le cas de porte-outils de poids particulièrement élevé, par exemple lorsque la largeur du porte-outils en position déployée, entre les extrémités des bras, dépasse une quinzaine de mètres, ou lorsque les appareils agricoles sont particulièrement pesants.

La référence 50 désigne un traceur qui marque un sillon dans le sol, pour faciliter la conduite du tracteur dans son passage suivant. Un tel dispositif est déjà connu, comme décrit dans le document précité, et on ne le décrit donc pas plus en détail.

Bien qu'on ait décrit un porte-outils équipé de trois semoirs, le nombre peut être différent, par exemple égal à 2, 4 ou 5.

De même, bien qu'on ait décrit un porte-outils équipé de semoirs, les appareils agricoles peuvent être d'autres types.

## Revendications

1. Porte-outils destiné à combiner des appareils agricoles, comprenant un châssis (12) porté par des roues (14), le châssis (12) ayant une flèche (16) et des bras (18) articulés autour d'axes sensiblement verticaux entre une position sensiblement parallèle à la flèche (16) et une position sensiblement perpendiculaire à la flèche (16), chaque bras (18) au moins étant muni d'un attelage (22, 26) d'appareil agricole (20, 24), les roues (14) étant disposées par paire de roues (32,34) à chaque extrémités d'une traverse (36) montée sur le châssis (12), **caractérisé par** un dispositif de réglage de l'espacement des paires de roues (32, 34) du porte-outils, par déplacement de chaque paire de roues (32, 34) en direction perpendiculaire à la flèche (16).

2. Porte-outils selon la revendication 1, **caractérisé en ce que** la paire de roues (32, 34) de chaque extrémité de la traverse (36) est montée sur un essieu, de sorte qu'elle forme des roues jumelées (32, 34), avec un espace entre les deux roues (32, 34) de la paire.

3. Porte-outils selon la revendication 2, **caractérisé en ce que** l'espace entre les deux roues (32, 34) de la paire est supérieur ou égal à la moitié de la largeur de chaque roue (32, 34) de la paire.

4. Porte-outils selon l'une des revendications 2 et 3, **caractérisé en ce que** les deux roues d'une paire au moins sont décalées longitudinalement.

5. Porte-outils selon l'une quelconque des revendications 1 à 4, **caractérisé en ce que** la paire de roues (32, 34) au moins de chaque extrémité de la traverse (36) comporte deux paires de roues comprenant chacune deux roues jumelées espacées sur un même essieu, les deux essieux des deux paires de chaque extrémité de la traverse étant placés l'un derrière l'autre dans la direction de la flèche afin que, lors d'un déplacement du porte-outils, les roues de la paire arrière roulent sur les traces des roues de la paire avant.

6. Porte-outils selon l'une quelconque des revendications précédentes, **caractérisé en ce que** chaque appareil agricole (20, 24) est monté sur un attelage (22, 26) qui limite la charge appliquée au sol par l'appareil agricole.

7. Porte-outils selon la revendication 6, **caractérisé en ce que** l'attelage (22, 26) a une forme de parallélogramme et comprend un organe qui limite la déformation du parallélogramme.

8. Porte-outils selon l'une quelconque des revendications précédentes, **caractérisé en ce que** les appareils agricoles (20, 24) portés par les attelages sont des semoirs pneumatiques, et le porte-outils possède une turbine (44) montée sur le châssis et alimentant tous les semoirs (20, 24) .

9. Porte-outils selon l'une quelconque des revendications précédentes, **caractérisé en ce qu'**il comporte un appareil (40) de réglage fin de la position de chaque bras (18) afin que chaque bras (18) soit bien perpendiculaire à la flèche (16).

## Claims

1. A tool carrier for combining agricultural apparatuses, comprising a frame (12) carried by wheels (14), the frame (12) including a boom (16) and arms (18) articulated about essentially vertical axes between a position essentially parallel to the boom (16) and a position essentially perpendicular to the boom (16), each arm (18) including at least one coupling (22, 26) for an agricultural tool (20, 24), and the wheels (14) being provided as wheel pair at each end of a crossbar (36) mounted on the frame (12), **characterized by** a device for adjusting the spacing of the wheel pairs (32, 34) of the tool carrier by shifting each wheel pair (32, 34) in a direction perpendicular to the boom (16).

2. A tool carrier according to claim 1, **characterized in that** the wheel pair (32, 34) on each end of the crossbar (36) is mounted on an axle, such that it forms dual wheels (32, 34), with a space between the two wheels (32, 34) of the pair.

3. A tool carrier according to claim 2, **characterized in that** the space between the two wheels (32, 34) of the pair is greater than or equal to half the width of each wheel (32, 34) of the pair.

4. A tool carrier according to any one of claims 2 and 3, **characterized in that** both wheels of at least one pair are shifted longitudinally.

5. A tool carrier according to any one of claims 1 to 4, **characterized in that** the wheel pair (32, 34) on at least each end of the crossbar (36) has two pairs of wheels, each comprising two dual wheels spaced on a single axle, both axles of both pairs of each end of the crossbar being placed one behind the other in the direction of the boom so that, when the tool carrier is moved, the wheels of the rear pair roll on the tracks of the wheels of the front pair.

6. A tool carrier according to any one of the previous claims, **characterized in that** each agricultural apparatus (20, 24) is mounted on a coupling (22, 26) that limits the load applied to the ground by the agricultural apparatus.

7. A tool carrier according to claim 6, **characterized in that** the coupling (22, 26) has the shape of a parallelogram and includes a body that limits the deformation of the parallelogram.

8. A tool carrier according to any one of the previous claims, **characterized in that** the agricultural apparatuses (20, 24) carried by the couplings are pneumatic drills, and the tool carrier has a turbine (44) mounted on the frame, powering all of the drills (20, 24).

9. A tool carrier according to any one of the previous claims, **characterized in that** it comprises a device (40) for finely adjusting the position of each arm (18) so that each arm (18) is perpendicular to the boom (16).

## Patentansprüche

1. Werkzeughalter, der dazu bestimmt ist, landwirtschaftliche Geräte zu kombinieren, mit einem Rahmen (12), der von Rädern (14) getragen wird, wobei der Rahmen (12) eine Deichsel (16) und Arme (18) enthält, die um etwa vertikale Achsen zwischen einer Position in etwa parallel zur Deichsel (16) und einer Position in etwa senkrecht zur Deichsel (16) bewegt werden können, wobei jeder Arm (18) zumindest mit einer Kupplung (22, 26) für landwirtschaftliche Geräte (20, 24) versehen ist und die Räder (14) paarweise (32, 34) an den jeweiligen Enden einer Traverse (36) angeordnet sind, die auf dem Rahmen (12) montiert ist, **gekennzeichnet durch** eine Vorrichtung zum Einstellen des Abstandes der Radpaare (32, 34) des Werkzeughalters **durch** das Verschieben eines jeden Radpaares (32, 34) in eine Richtung senkrecht zur Deichsel (16)

2. Werkzeughalter nach Anspruch 1, **dadurch gekennzeichnet, dass** das Radpaar (32, 34) an jedem Ende der Traverse (36) so auf einer Achse montiert ist, dass es Zwillingsräder (32, 34) mit einem Freiraum zwischen den beiden Rädern (32, 34) des Paares bildet.

3. Werkzeughalter nach Anspruch 2, **dadurch gekennzeichnet, dass** der Freiraum zwischen den beiden Rädern (32, 34) des Paares größer oder gleich der halben Breite eines jeden Rades (32, 34) des Paares ist.

4. Werkzeughalter nach einem der Ansprüche 2 und 3, **dadurch gekennzeichnet, dass** die beiden Räder zumindest eines Paares längs versetzt sind.

5. Werkzeughalter nach irgendeinem der Ansprüche 1 bis 4, **dadurch gekennzeichnet, dass** das Radpaar (32, 34) zumindest an jedem Ende der Traverse (36) zwei Radpaare enthält, wobei jedes davon zwei Zwillingsräder enthält, die in einem Abstand auf einer selben Achse angebracht sind, wobei die beiden Achsen der beiden Paare an jedem Ende der Traverse jeweils hintereinander in Richtung der Deichsel angebracht sind, damit die Räder des rückwärtigen Paares beim Verfahren des Werkzeughalters den Spuren der Räder des vorderen Paares folgen.

6. Werkzeughalter nach irgendeinem der vorherigen Ansprüche, **dadurch gekennzeichnet, dass** jedes landwirtschaftliche Gerät (20, 24) auf einer Kupplung (22, 26) montiert ist, wodurch die Last, die vom landwirtschaftlichen Gerät auf den Boden wirkt, begrenzt wird.

7. Werkzeughalter nach Anspruch 6, **dadurch gekennzeichnet, dass** die Kupplung (22, 26) die Form eines Parallelogramms aufweist und ein Organ enthält, das die Verformung des Parallelogramms einschränkt.

8. Werkzeughalter nach irgendeinem der vorherigen Ansprüche, **dadurch gekennzeichnet, dass** die landwirtschaftlichen Geräte (20, 24), die von den Kupplungen getragen werden, pneumatische Sämaschinen sind, und der Werkzeughalter über eine Turbine (44) verfügt, die auf dem Rahmen montiert ist, und alle Sämaschinen (20, 24) versorgt.

9. Werkzeughalter nach irgendeinem der vorherigen Ansprüche, **dadurch gekennzeichnet, dass** er ein Gerät (40) zur Feineinstellung der Position eines jeden Armes (18) enthält, damit jeder Arm (18) auch tatsächlich senkrecht zur Deichsel (16) steht.
